# EUROPÄISCHE PATENTSCHRIFT

(11) **EP 1 134 449 B1**
(45) Veröffentlichungstag und Bekanntmachung des Hinweises auf die Patenterteilung: **08.06.2005**
(21) Anmeldenummer: 01105635.5
(22) Anmeldetag: 07.03.2001
(51) Int. Cl.: F16D 65/54, F16D 55/40

(54) **Verschleissnachstellvorrichtung**
Wear adjustment device
Dispositif de rattrapage d'usure

(30) Priorität: 13.03.2000 DE 10012146
(43) Veröffentlichungstag der Anmeldung: 19.09.2001
(73) Patentinhaber: ZF FRIEDRICHSHAFEN Aktiengesellschaft, 88038 Friedrichshafen (DE)
(72) Erfinder: Friedl, Reinhard, 94146 Hinterschmiding (DE)

(56) Entgegenhaltungen:
- EP-A- 0 437 471
- EP-A- 0 929 758
- DE-A- 19 621 197

## Beschreibung

Die vorliegende Erfindung betrifft eine automatische Nachstellvorrichtung für den Kolben einer Lamellenbremse, die insbesondere in die Radbremsen einer landwirtschaftlichen oder bauwirtschaftlichen Arbeitsmaschine eingesetzt ist, wobei die Lamellenbremse ein Gehäuse mit einem darin konzentrisch zur Achse der Lamellen geführten hydraulisch verschiebbaren Ringkolben aufweist, nach dem Oberbegriff des Anspruchs 1.

Aus der DE PS 195 09 965 ist eine Nachstellvorrichtung für hydraulisch zu betätigende Scheibenbremsen bekannt, mit Führungsbuchsen, die in ausserhalb der Bremsscheiben der Mehrscheibenreibungsbremse liegenden achsparallelen Bohrungen des Bremsgehäuses verschieblich geführt sind. Innerhalb der Führungsbuchsen sind Rückstellfedern und Lagerzapfen konzentrisch angeordnet, wobei letztere sich mit ihrem einen Ende über einen Stift in einer Querbohrung der Führungsbuchsen abstützen und mit ihrem anderen kopfseitigen Ende an einer im Durchmesser grösser als die Bremsscheiben ausgebildeten Druckscheibe anliegen, auf deren anderen Seite der Druckkolben der Mehrscheibenreibungsbremse angreift.

Diese bekannte Nachstellvorrichtung weist noch den Nachteil auf, dass sie zum einen in dem ausserhalb der Bremsscheibe liegenden Bereich vergleichsweise viel Platz beansprucht, um die Nachstellvorrichtung unterbringen zu können, sodass demgemäss die Bremsscheiben im Durchmesser nur relativ klein ausgebildet werden können. Ferner muss wegen der im äusseren Teil der Bremse liegenden Anordnung der Nachstellvorrichtung eine besondere Druckscheibe vorgesehen sein, um eine Übertragung der Bewegung des Druckkolbens auf die Nachstellvorrichtung zu ermöglichen.

Eine selbsttätig wirkende mechanische Nachstellvorrichtung für eine nasslaufende Mehrscheiben-Reibungsbremse mit geringerem Raumbedarf ist aus der DE A 26 52 060 bekannt. Hierbei sind die Lagerzapfen durch im Durchmesser grössere Bohrungen des Druckkolbens oder eines Zwischenflansches des Bremsgehäuses hindurchgeführt und mit ihrem einen Ende im Bremsgehäuse oder im Druckkolben befestigt. Die Nachstellvorrichtung ist dabei in den radial innenliegenden Bereich der Mehrscheiben-Reibungsbremse verlegt, um die Bremsleistung zu erhöhen. Bei einem darin beschriebenen Ausführungsbeispiel sind die Lagerzapfen mit ihrem einen Ende im Bremsgehäuse fest eingeschraubt und durchsetzen die sich axial erstreckenden und im Durchmesser grösseren Bohrungen des Druckkolbens. Dabei sind die Bohrungen gegenüber den Lagerzapfen im Durchmesser mindestens um den Betrag grösser auszubilden, der dem maximalen Verdrehspiels des Druckkolbens entspricht. An ihrem der Befestigungsstelle abgewandten und aus dem Druckkolben herausragenden Ende sitzen auf den Lagerzapfen Führungsbuchsen, wobei zwischen diesen Buchsen und einer Schulter einer im Druckkolben angeordneten Ringausnehmer Rückstellfedern angeordnet sind. Ferner sind auf den Lagerzapfen als Reibringe ausgebildete Klemmelemente angeordnet, die in Bohrungen einer Ringplatte liegen, wobei bei auftretendem Verschleiss an den Bremsscheiben sowohl die Führungsbuchsen als auch die Klemmelemente auf den Lagerzapfen in eine neue angepasste Position verschoben und dort fixiert werden.

Bei einem weiteren darin beschriebenen Ausführungsbeispiel ist das Bremsgehäuse mit einem daran fest angeordnete Zwischenflansch versehen, wobei die Nachstellvorrichtung in den Druckkolben eingeschraubte Lagerzapfen aufweist, auf denen Rückstellfedern konzentrisch angeordnet sind. Auch hier sind die Lagerzapfen mit Führungsbuchsen versehen, wobei Lagerzapfen und ein Teil der Führungsbuchse durch eine Bohrung im Zwischenflansch des Bremsgehäuses hindurch geführt sind. Die Bohrung im Zwischenflansch ist auch hierbei um den Betrag des maximalen Verdrehspiels des Druckkolbens im Durchmesser grösser auszubilden als der Durchmesser der Führungsbuchse.

Nachteilig ist dabei, dass für die Klemmelemente nur wenig axialer Bauraum verfügbar ist und sie in unmittelbarer Nähe der Bremsen zu heiss werden können. Auch können sich leicht Störungen in der Bremswirkung ergeben. Ferner führt die axiale Zwischenschaltung der Rückstellfedern zwischen Klemmelement und Kolben in Vergleich zu paralleler Anordnung von Federn und Nachstelleinrichtung zu einem erhöhten Baulängenbedarf.

Aus der EP B 437 471 ist eine Nachstellvorrichtung für die Betätigungskolben hydraulisch betätigbarer und nasslaufender Mehrscheibenbremsen bzw. -kupplungen bekannt, mit einem Bremsgehäuse und darin konzentrisch zur Achse von Reibscheiben geführtem Ringkolben, der axial zwischen einer Gehäusestirnwand und den Reibscheiben angeordnet ist. Im Ringkolben sind Bohrungen vorgesehen, die von Haltebolzen axial durchsetzt sind, wobei die Bohrungen bis in die Gehäusestirnwand reichen und mit Klemmelementen zusammenwirken. Die Haltebolzen sind mit ihren den Reibscheiben zugewandten Enden am Ringkolben axial starr befestigt und reichen mit ihren den Reibscheiben abgewandten Enden bis zur jeweiligen Bohrung in der Gehäusestirnwand, wobei sie ein Umfangsspiel aufweisen müssen, das grösser als das radiale Kolbenspiel ist. Damit wird ein Einbau der Klemmelemente in grösserer axialer Entfernung von den Reibscheiben in einer wärme- und verschmutzungsgeschützten Position ermöglicht.

Bei diesen bekannten Nachstellvorrichtungen, wie sie in den beiden Vorveröffentlichungen beschrieben sind, ist jeweils ein Teil der Nachstellvorrichtung im feststehenden Gehäuse untergebracht, während der restliche Teil der Nachstellvorrichtung im Kolben angeordnet ist. Bei jeder Bremsbetätigung wird jedoch der Kolben aufgrund des tangentialen Spiels im Mitnahmeprofil der Bremslamellen und des Bremsgehäuses geringfügig verdreht. Je nach Grösse des erforderlichen Bremsmomentes wird also ein Drehmoment am Kolben aufgebaut, das über Bolzen oder dgl. abgestützt werden muss. Ohne diese Drehmomentabstützung des Kolbens wird die Nachstellvorrichtung verklemmt, sodass deren Funktion behindert wird. Bei anderen Konstruktionen wirkt die Nachstellvorrichtung auf eine Aussenlamelle, wobei über diese der Kolben zurückgedrückt und das Lamellenpaket gelüftet wird.

Aufgabe der vorliegenden Erfindung ist es, eine automatische Nachstellvorrichtung für den Kolben einer Lamellenbremse zu schaffen, deren Funktion durch eine Rotation des Kolbens nicht beeinflusst wird, die kompakt aufgebaut ist und die anstelle herkömmlicher Nachstellvorrichtungen einsetzbar ist. Diese Aufgabe wird durch die Merkmale des Anspruchs 1 gelöst.

Ausgehend von einer Nachstellvorrichtung für den Kolben einer Lamellenbremse, wobei die Lamellenbremse ein Gehäuse mit einem darin konzentrisch zur Achse der Lamellen geführten hydraulisch verschiebbaren Ringkolben aufweist, der bei Betätigung der Bremse die Lamellen zusammendrückt, wobei aufgrund des tangentialen Spiels im Mitnahmeprofil der auf einer Welle gelagerten Innenlamellen und der im Gehäuse gelagerten Aussenlamellen der Kolben verdreht wird, erfolgt die Lösung dieser Aufgabe mit den im Anspruch angegebenen Merkmalen.

Erfindungsgemäss ist also vorgesehen, dass die Nachstellvorrichtung aus Bolzen, Greifringen, Tellerfedern, einem Stützring und einem Sicherungsring besteht, wobei der Stützring über diesen Sicherungsring am Gehäuse axial festgelegt, jedoch axial verdrehbar gelagert ist und dass die Bolzen axial verschiebbar im Kolben gelagert sind, sodass sie als tangentiale Mitnahme für den Stützring dienen.

Der Sicherungsring für den Stützring stützt die Rückstellkräfte der Nachstellvorrichtung ab, sodass der Kolben um den eingestellten Luftspielwert zurückgedrückt werden kann. Da die Bolzen der Nachstellvorrichtung axial im Kolben geführt sind, können sie als tangentiale Mitnahme für den Stützring dienen.

Die komplette Nachstellvorrichtung kann dabei mit dem Kolben rotieren, sodass keine Drehmomentabstützung des Kolbens mehr erforderlich ist und die Nachstellvorrichtung in ihrer Funktion nicht gestört wird.

Es ist ferner möglich, die Nachstellvorrichtung vollständig ausserhalb der Achse vorzumontieren und anstelle herkömmlicher Nachstellvorrichtungen in die Bremse einzubauen.

Im folgenden wird die Erfindung anhand der Zeichnung näher erläutert, in der ein vorteilhaftes Ausführungsbeispiel dargestellt ist.
Es zeigen:
- Fig. 1: einen Teilschnitt durch eine herkömmliche Lamellenbremse;
- Fig. 2: einen Schnitt durch die erfindungsgemässe Nachstellvorrichtung im eingebauten Zustand;
- Fig. 3: eine Draufsicht auf die Nachstellvorrichtung und
- Fig. 4: eine Seitenansicht der als vormontierte Ein heit ausgebildeten Nachstellvorrichtung vor dem Einbau.

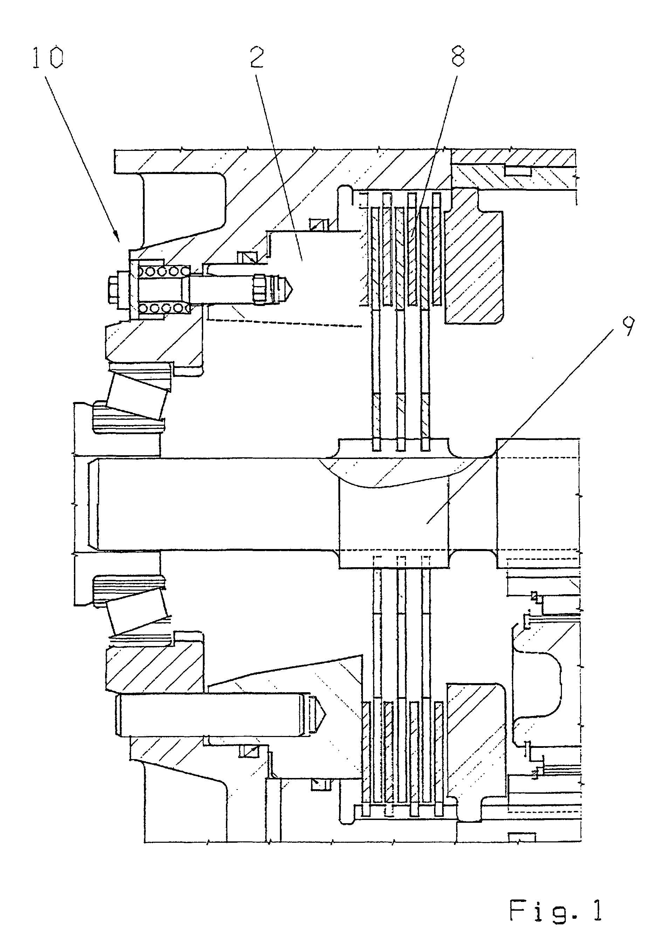

Hydraulisch zu betätigende Scheibenbremsen, insbesondere nasslaufende Mehrscheiben-Reibungsbremsen oder Lamellenbremsen, mit einem entgegen Rückstellfedern verschiebbaren Druckkolben sind dem Fachmann gut bekannt, sodass in den Figuren nur die wesentlichen für das Verständnis der Erfindung notwendigen Bauteile mit Bezugszeichen versehen sind. Bei dem in Fig. 1 dargestellten Teilschnitt durch eine derartige Bremse ist mit 1 das Gehäuse bezeichnet, mit 2 der hydraulisch betätigbare Kolben und mit 8 das Lamellenpaket, bestehend aus einer Anzahl von mit der Welle 9 verbundener Innenlamellen und einer Anzahl von mit diesen kämmenden, mit dem Gehäuse verbundenen Aussenlamellen. Bei entsprechender Betätigung des Bremspedals beaufschlagt der im Gehäuse verschieblich gelagerte Druckkolben 2 die Bremsscheiben des Lamellenpaketes 8, um die Bremswirkung zu erzeugen.

Die hierbei angedeutete Nachstellvorrichtung 10 besteht, wie eingangs bereits näher erläutert, aus zwei Teilen, wobei ein Teil im feststehenden Gehäuse 1 und der andere Teil im Kolben 2 angeordnet ist, mit den daraus resultierenden weiter oben erwähnten Nachteilen. Das heisst, dass bei jeder Bremsbetätigung der Kolben aufgrund des tangentialen Spieles im Mitnahmeprofil der Bremslamellen und des Bremsgehäuses geringfügig verdreht wird, wobei je nach Grösse des erforderlichen Bremsmomentes ein Drehmoment am Kolben 2 aufgebaut wird, das über Bolzen oder dergleichen abgestützt werden muss.

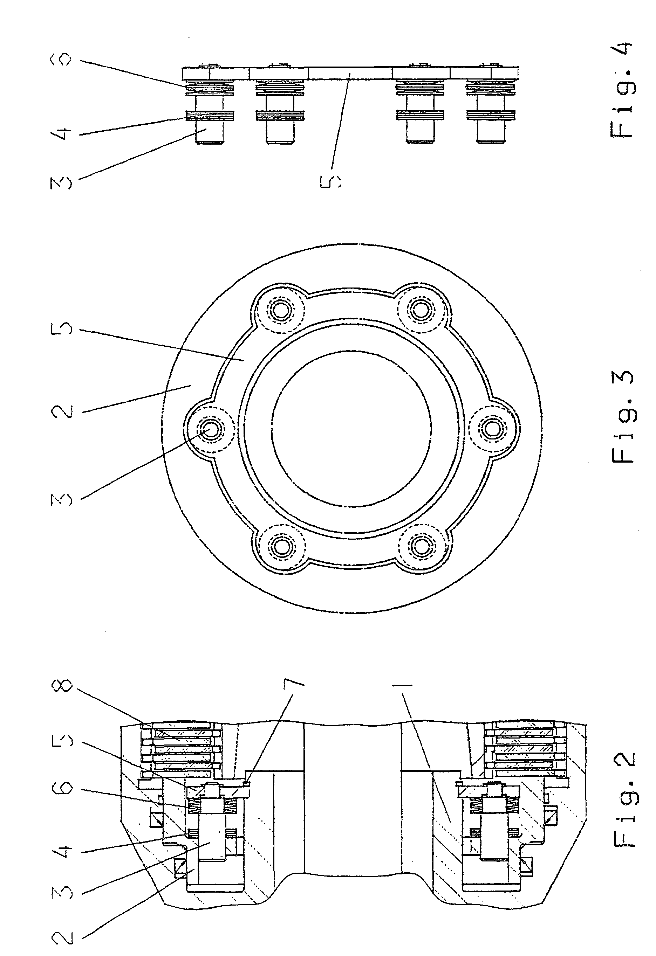

Fig. 2 zeigt einen Teilschnitt durch eine Lamellenbremse mit einer erfindungsgemäss ausgestalteten Nachstellvorrichtung, bei der keine Drehmomentabstützung des Kolbens erforderlich wird, sodass ein Verklemmen der Nachstellvorrichtung und damit eine Behinderung ihrer Bremsfunktion vermieden wird.

Mit 1 ist das Gehäuse der Bremse bezeichnet, mit 2 der Druckkolben, mit 3 ein Bolzen, mit 4 Greifringe, mit 5 ein Stützring, mit 6 eine Tellerfeder, mit 7 ein Sicherungsring und mit 8 das zu betätigende die Bremswirkung erzeugende Lamellenpaket.

Wie man sieht, besteht die erfindungsgemässe Nachstellvorrichtung aus einem Bolzen mit darauf gelagerten Greifringen und Tellerfedern, wobei letztere mittels eines (kleinen) Sicherungsringes gehalten werden und wobei der Bolzen mit den Greifringen und den Tellerfedern in Axialrichtung auf einem Stützring 5 montiert sind. Dieser Stützring ist axial über einen (grossen) Sicherungsring 7 am Bremsgehäuse in Axialrichtung fixiert, jedoch in Axialrichtung drehbar gelagert. Der Sicherungsring 7 stützt die Rückstellkräfte der Nachstellvorrichtung ab, wobei der Kolben 2 um den eingestellten Lüftspielwert zurückgedrückt werden kann.

Die Bolzen 3 der Nachstellvorrichtung sind axial im Kolben 2 geführt und dienen dadurch als tangentiale Mitnahme des Stützringes 5. Jeder Bolzen 3 weist dabei mehrere Abschnitte unterschiedlichen Durchmessers auf, wobei der Abschnitt mit dem geringstem Durchmesser eine Öffnung im Stützring 5 durchsetzt, der Abschnitt mit dem mittleren Durchmesser die Tellerfeder 6 aufnimmt und der Abschnitt mit dem grössten Durchmesser die Greifringe 4 trägt, deren Abstand von dem Stützring 5 dem Lüftspielwert entspricht. Die Greifringe 4 liegen im entspannten Zustand der Bremse an einer in der Aufnahmebohrung für den Bolzen 3 des Kolbens 2 ausgebildeten Schulter an.

Fig. 3 zeigt eine Vorderansicht dieser Konstruktion, wobei mit 3 die Bolzen, mit 2 der Kolben und mit 5 wiederum der Stützring bezeichnet sind.

Die erfindungsgemässe Nachstellvorrichtung lässt sich ohne weiteres als komplette Baueinheit vor dem Einbau in die Bremse vormontieren, wie es in Fig. 4 dargestellt ist, in der wiederum mit 4 die Greifringe, mit 3 der Bolzen, mit 6 die Tellerfeder und mit 5 der Stützring bezeichnet sind.

Durch diesen Aufbau wird also erfindungsgemäss erreicht, dass die vollständige Nachstellvorrichtung zusammen mit dem Kolben 2 während eines Bremsvorganges wandern, d. h. rotieren kann, sodass keine Drehmomentabstützung des Kolbens mehr erforderlich ist und die Nachstellfunktion durch die Rotation des Kolbens nicht beeinflusst wird.

### Bezugszeichen

- 1: Gehäuse
- 2: Kolben
- 3: Bolzen
- 4: Greifringe
- 5: Stützring
- 6: Tellerfeder
- 7: Sicherungsring
- 8: Lamellen
- 9: Welle
- 10: Nachstellvorrichtung

## Patentansprüche

1. Automatische Nachstellvorrichtung für den Kolben einer Lamellenbremse, die insbesondere in die Radbremsen von landwirtschaftlichen und/oder bauwirtschaftlichen Arbeitsmaschinen eingesetzt ist, wobei die Lamellenbremse ein Gehäuse mit einem darin konzentrisch zur Achse der Lamellen geführten hydraulisch verschiebbaren Ringkolben aufweist, der bei Betätigung der Bremse die Lamellen zusammendrückt, wobei aufgrund des tangentialen Spiels im Mitnahmeprofil der auf einer Welle gelagerten Innenlamellen und der im Gehäuse gelagerten Aussenlamellen der Kolben verdreht wird, **dadurch gekennzeichnet, dass** die Nachstellvorrichtung aus Bolzen (3), mit darauf angeordneten Greifringen (4) und Tellerfedern (6), sowie aus einem Stützring (5) und einem Sicherungsring (7) besteht, wobei der Stützring über diesen Sicherungsring am Gehäuse (1) axial festlegbar ist, jedoch axial verdrehbar gelagert ist und dass jeder Bolzen (3) axial verschiebbar im Kolben (2) lagerbar ist, sodass er als tangentiale Mitnahme für den Stützring (5) dient.

## Claims

1. Automatic reset apparatus for the piston of a multiple disc brake that is fitted, in particular, into the wheel brakes of agricultural and/or construction industry machines, wherein the multiple disc brake comprises a housing, in which a hydraulically displaceable annular piston is guided concentrically with the axis of the discs and upon actuation of the brake compresses the discs, wherein because of the tangential play in the driving profile of the inner discs supported on a shaft and of the outer discs supporting in the housing the piston is twisted,
**characterized in that** the reset apparatus comprises bolts (3), having gripping rings (4) and cup springs (6) disposed thereon, as well as a support ring (5),and a securing ring (7), wherein by means of said securing ring the support ring is axially fixable on the housing (1), but supported in an axially rotatable manner and that each bolt (3) is supportable in an axially displaceable manner in the piston (2) so that it serves as a tangential drive for the support ring (5).

## Revendications

1. Dispositif de réglage pour le piston d'un frein à disques utilisé notamment dans les freins de roues de machines agricoles et/ou de chantier, dans lequel le frein à disques comprend un carter avec un piston annulaire hydraulique mobile, guidé de manière concentrique par rapport à l'axe des disques, qui, lors de l'actionnement du frein, comprime les disques, dans lequel, du fait du jeu tangentiel dans le profil d'entraînement des disques internes logés sur un arbre et des disques externes logés dans le carter, le piston est tourné, **caractérisé en ce que** le dispositif de réglage est constitué de goujons (3), sur lesquels sont montés des bagues de prise (4) et des ressorts à disques (6), ainsi que d'une bague d'appui (5) et d'une bague de fixation (7), la bague d'appui (5) pouvant être fixée axialement à l'aide de cette bague de fixation sur le carter (1), mais étant cependant logée de manière rotative axialement, et **en ce que** chaque goujon (3) peut être logé de manière mobile axialement dans le piston (2), de telle sorte qu'il serve d'entraînement tangentiel pour la bague d'appui (5).
